# EUROPÄISCHE PATENTSCHRIFT

(11) **EP 0 693 162 B1**
(45) Veröffentlichungstag und Bekanntmachung des Hinweises auf die Patenterteilung: **18.11.1998**
(21) Anmeldenummer: 95903328.3
(22) Anmeldetag: 08.12.1994
(51) Int. Cl.: F16B 13/12

(54) **SPREIZDÜBEL**
EXPANDING PLUG
CHEVILLE D'EXPANSION

(30) Priorität: 08.02.1994 DE 4403894
(43) Veröffentlichungstag der Anmeldung: 24.01.1996
(73) Patentinhaber: fischerwerke Artur Fischer GmbH & Co. KG, D-72178 Waldachtal (DE)
(72) Erfinder: HAAGE, Manfred, D-72280 Dornstetten (DE); SEIBOLD, Günter, D-72285 Pfalzgrafenweiler (DE); PLOCHER, Bernd, D-72108 Rottenburg (DE); HEIN, Bernd, D-72250 Freudenstadt (DE); WEBER, Wilfried, D-72296 Schopfloch (DE)
(86) Internationale Anmeldenummer: EP9404079
(87) Internationale Veröffentlichungsnummer: WO9522007

(56) Entgegenhaltungen:
- EP-A- 0 054 681
- DE-A- 3 018 975
- GB-A- J25 148

## Beschreibung

Die Erfindung betrifft einen Spreizdübel mit einer den Dübelkörper vollständig durchdringenden Innenbohrung zum Eintreiben eines nagel- oder schraubenförmigen Spreizstiftes.

Ein derartiger, aus Kunststoff hergestellter Spreizdübel ist bekannt aus der EP-A 0 054 681. Die Innenbohrung des bekannten Spreizdübels verläuft gerade und achsparallel, sie verjüngt sich zum vorderen Dübelende hin. Im Bereich der sich verjüngenden Innenbohrung weist der Spreizdübel einen den Spreizdübel quer durchsetzenden Längsschlitz auf, um ein Aufspreizen mittels des Spreizstiftes zu ermöglichen. Im sich verjüngenden Bereich ist die Innenbohrung mit einem Gewinde versehen, in das der schraubenförmig ausgebildete Spreizstift eindrehbar ist. Um eine ausreichende Aufspreizung insbesondere auch in weichen Baustoffen zu erreichen, verjüngt sich die Innenbohrung an ihrem Ende auf einen Durchmesser, der nur geringfügig größer als die Schlitzbreite ist. Diese sehr starke Verjüngung der Innenbohrung verursacht einen hohen Einschraubwiderstand, der bei Verwendung des bekannten Spreizdübels in harten Baustoffen unter Umständen ein vollständiges Einschrauben des Spreizstiftes verhindert. Desweiteren wird durch die sich nur auf einen Teil der Länge des Spreizdübels auswirkende Aufspreizung keine dem hohen Eintreibwiderstand angemessene Haltekraft erreicht. Ein solches Spreizprinzip ist daher für Hohlkammerbausteine wenig geeignet, da durch die ungleichmäßige Verteilung der Spreizkraft Spannungsspitzen in einzelnen Stegen der Hohlkammerbausteine entstehen können, die zu einer Zerstörung des Hohlkammerbausteines führen. Desweiteren ergibt sich bei dem bekannten Spreizdübel durch die zentrale und achsparallele Anordnung der Innenbohrung und des Längsschlitzes eine Aufspreizung ausschließlich quer zum Längsschlitz, die zum einen eine Spaltwirkung erzeugt und zum anderen trotz hohem Eindrehwiderstand keine gleichmäßige und damit hohe Haltekraft bewirkende Spannungsverteilung im Bohrloch ermöglicht.

Der Erfindung liegt die Aufgabe zugrunde, einen mit einem nagel- oder schraubenförmigen Spreizstift verankerbaren Spreizdübel zu schaffen, der bei geringem Eintreibwiderstand hohe Haltekräfte sowohl in weichen und porösen als auch in harten Baustoffen ermöglicht.

Die Lösung dieser Aufgabe wird durch die im Anspruch 1 angegebenen Merkmale erreicht. Durch die um die Mittelachse des Spreizdübels wendelförmig gewundene Innenbohrung wird eine sich sinusförmig auf die Länge des Spreizdübels verändernde Exzentrizität erreicht, die zusätzlich noch um die Mittelachse rotiert. Durch den zylinderförmigen Spreizstift erfolgt somit an jeder Stelle des Spreizdübels eine Verspreizung entsprechend der an dieser Stelle vorhandenen Exzentrizität der Innenbohrung zum Außenumfang des Spreizdübels. Aufgrund der den Dübelkörper als gewundene Säule durchdringenden Innenbohrung ergibt sich somit selbst bei einem dem Außendurchmesser des Spreizstiftes entsprechenden Durchmesser der Innenbohrung eine sich wendelförmig am Außenumfang des Spreizdübels auswirkende Aufspreizung, die bei Vermeidung von Spannungsspitzen eine gleichmäßige, auf den gesamten Umfang verteilte Spreizkraft erzeugt. Durch den gleichen oder nur geringfügig kleineren Durchmesser der Innenbohrung gegenüber dem Außendurchmesser des Spreizstiftes wird die Aufspreizung bei einem sehr geringen Eindringwiderstand erreicht. Der erfindungsgemäße Spreizdübel eignet sich für eine Verankerung in allen Baustoffen, durch die Vermeidung von Spannungsspitzen und der über die gesamte Länge des Spreizdübels gleichmäßig verteilten Spreizwirkung besonders für einen Einsatz in weichen und porösen Baustoffen.

Bei Vollbaustoffen ist ein geringfügiger Anstieg der Spreizwirkung in der Bohrlochtiefe zur Erhöhung der Auszugskraft zweckmäßig. Dies kann in einfacher Weise dadurch erreicht werden, daß der Durchmesser der Innenbohrung am hinteren Ende des Dübels etwa gleich dem Außendurchmesser des Spreizstiftes ist und sich zum vorderen Ende des Dübels hin gleichmäßig auf einen Durchmesser verjüngt, der kleiner ist als der Außendurchmesser des Spreizstiftes.

Desweiteren hat sich gezeigt, daß ein optimales Verhältnis zwischen Eintreibwiderstand und Verankerungswirkung dann erreicht wird, wenn die maximale Exzentrizität der Mittelachse der Innenbohrung zur Längsachse des Spreizdübels etwa gleich dem halben Durchmesser der Innenbohrung ist.

Ferner ist es zweckmäßig, die Innenbohrung in der Weise zu gestalten, daß auf die Länge des Spreizdübels wenigstens zwei vollständige Windungen vorhanden sind.

Um für den Spreizdübel ein etwas härteres Material verwenden zu können, ist es vorteilhaft, diesen mit mehreren Längsschlitzen zu versehen. Diese Längsschlitze können abschnittsweise und auf dem Umfang und in Längsrichtung versetzt zueinander angeordnet sein, wobei die Versetzung der Längsschlitze am Umfang vorzugsweise jeweils 90° beträgt. Die Längsschlitze können entweder achsparallel oderwendelförmig entsprechend der Innenbohrung angeordnet sein.

In Verbindung mit der Verwendung eines nagelförmigen Spreizstiftes ist es zweckmäßig, die Innenbohrung mit wenigstens einer entlang ihrer Mantellinie verlaufenden Nut zu versehen, in die ein an dem nagelförmigen Spreizstift angeordneter Gewindegang eingreift. Durch diesen Gewindegang tritt eine Selbsthemmung ein, die beim Angreifen einer Zugkraft an dem nagelförmigen Spreizstift dessen Ausdrehen verhindert.

Der erfindungsgemäße Spreizdübel ist üblicherweise aus einem Kunststoff im Spritzgußverfahren hergestellt. Für spezielle Anwendungen, beispielsweise in Decken und in brandgefährdeten Räumen kann der erfindungsgemäße Spreizdübel auch aus Metall hergestellt sein. Die Herstellung erfolgt dann in dem an sich bekannten Metallspritzgußverfahren. Nach diesem Verfahren wird der Spreizdübel aus Metallpulver im Spritzgußverfahren unter Verwendung eines Bindersystems und nachträglichem Entbindern und Sintern hergestellt.

Die Erfindung wird nachfolgend anhand der in der Zeichnung dargestellten Ausführungsbeispiele näher erläutert.

Es zeigen:
- Figur 1: den Spreizdübel mit nagelförmigem Spreizstift,
- Figur 2: den im Bohrloch eines Mauerwerks verankerten Spreizdübel gemäß Figur 1,
- Figur 3: eine mit Längsschlitzen versehene Ausführungsform des Spreizdübels und
- Figur 4: einen Querschnitt gemäß der in Figur 3 angegebenen Schnittlinie A-A.

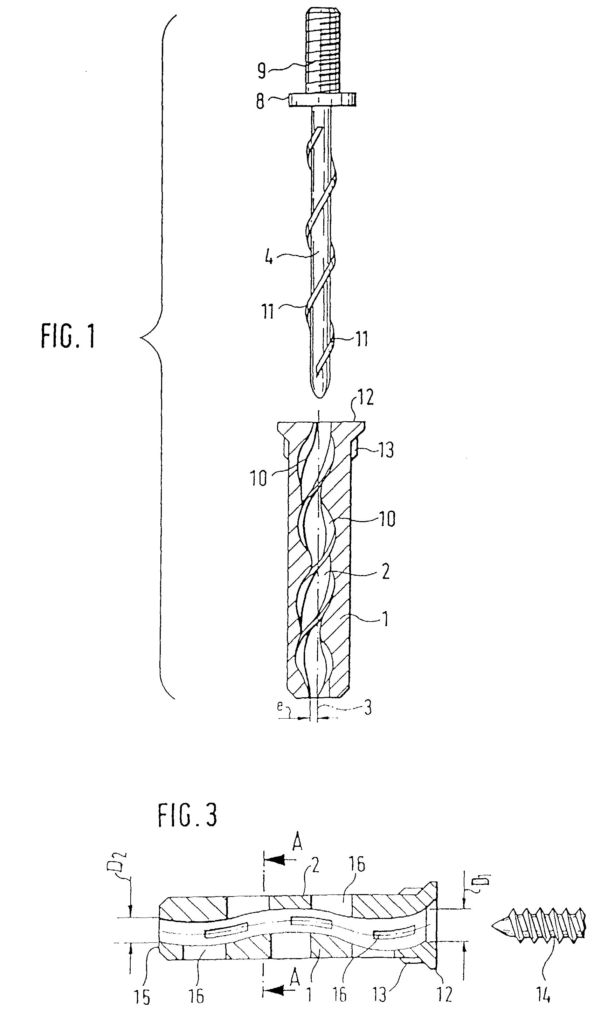

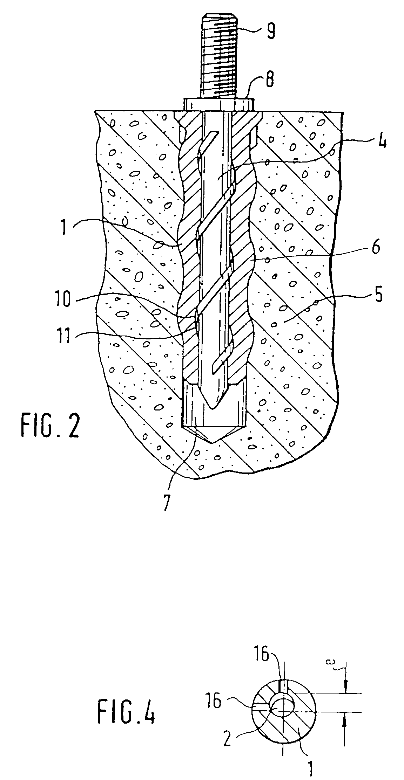

Der in Figur 1 dargestellte Spreizdübel 1 weist eine Innenbohrung 2 auf, die wendelförmig um die Mittelachse 3 gewunden den Dübelkörper vollständig durchdringt. Der Durchmesser der Innenbohrung 2 entspricht etwa dem Außendurchmesser des Spreizstiftes 4. Die Spreizwirkung des Dübels 1 beim Eintreiben des Spreizstiftes 4 in die gewundene Innenbohrung 2 wird dadurch erreicht, daß durch die gewundene Innenbohrung eine sich auf die Länge des Spreizdübels sich sinusförmig verändernde Exzentrizität e zur Mittelachse 3 ergibt. Die jeweilige Exzentrizität an einer bestimmten Stelle bewirkt eine Ausbauchung 6 an der gegenüberliegenden Stelle, die am Außenumfang des Spreizdübels sich wendelförmig ausbildet (siehe Figur 2) .Bei einem weichen Vollbaustoff 5 drücken sich diese Ausbauchungen 6 in die Wandung des Bohrloches 7 ein.

Der in Figur 1 und 2 verwendete Spreizstift 4 weist einen Bund 8 zur Begrenzung der Eindringtiefe und ein Anschlußgewinde 9 beispielsweise zur Befestigung einer Drahtabhängung für Rohre, Kabelschächte oder dgl. auf. Durch die am Spreizstift angreifende Zugkraft könnte der Spreizstift 4 aus der Innenbohrung 2 des Dübels 1 ausgezogen werden. Um dies zu verhindern ist die Innenbohrung 2 des Spreizdübels 1 mit zwei sich gegenüberliegenden und entlang der Mantellinie der Innenbohrung verlaufenden Nuten 10 versehen. Beim Eintreiben des Spreizstiftes 4 in die Innenbohrung 2 greifen die beiden sich gegenüberliegenden Gewindegänge 11 am Spreizstift 4 in die Nuten 10 der Innenbohrung 2 ein. Dadurch tritt eine Verzahnung zwischen dem Spreizstift 4 und dem Spreizdübel 1 ein, die das Ausziehen des Spreizstiftes 4 durch eine axiale Zugkraft verhindert. Zur Einschubbegrenzung ist der Dübel 1 mit einem Rand 12 und zur Drehsicherung mit vom Rand 12 ausgehenden längslaufenden Rippen 13 versehen.

Bei der in Figur 3 dargestellten Ausführungsform des Spreizdübels 1 weist die gewundene Innenbohrung 2 am hinteren Ende des Dübels einen Durchmesser D1 auf, der etwa dem Außendurchmesser der in diesem Ausführungsbeispiel verwendeten Befestigungsschraube 14 als Spreizstift entspricht. Bis zum vorderen Dübelende 15 verjüngt sich die Innenbohrung 2 auf den Durchmesser D2, der gleich oder geringfügig größer ist als der Kerndurchmesser der Befestigungsschraube 14. Dadurch wird zusätzlich zu der wendelförmigen Ausbeulung des Dübels beim Eindrehen der Befestigungsschraube eine zum Bohrlochgrund zunehmende Aufspreizung erreicht. Insbesondere bei Verwendung eines härteren Kunststoffes oder bei einer Herstellung des Dübels 1 aus einem Metall ist der Spreizdübel 1 mit mehreren Längsschlitzen 16 versehen. In dem in Figur 3 dargestellten Ausführungsbeispiel sind die Längsschlitze 16 abschnittsweise und auf dem Umfang und in Längsrichtung versetzt zueinander angeordnet. In Figur 4 ist erkennbar, daß die Versetzung jeweils 90° beträgt und die Längsschlitze 16 in der Weise überlappt sind, daß an jeder Stelle des Dübels wenigstens zwei Längsschlitze vorhanden sind. Ferner können die Längsschlitze parallel mit der Innnebohrung 2 verlaufend wendelförmig angeordnet sein.

Die Herstellung des Spreizdübels 1 aus Kunststoff erfolgt im Spritzgußverfahren und aus Metall in dem ebenfalls an sich bekannten Metall-Spritzgußverfahren. Bei diesem Verfahren wird der Dübel aus Metallpulver im Spritzgußverfahren unter Verwendung eines Bindersystems und nachträglichem Entbindern und Sintern hergestellt.

## Patentansprüche

1. Spreizdübel (1) mit einer den Dübelkörper vollständig durchdringenden Innenbohrung (2) und mit einem in die Innenbohrung (2) eintreibbaren nagel- oder schraubenförmigen Spreizstift (4), wobei die Innenbohrung (2) mindestens über einen Teil Ihrer Länge einen Durchmesser aufweist, der gleich oder geringfügig kleiner ist als der Außendurchmesser des Spreizstiftes (4), **dadurch gekennzeichnet**, daß die Innenbohrung (2) im Spreizdübel (1) um die Mittelachse (3) wendelförmig gewunden angeordnet ist.

2. Spreizdübel nach Anspruch 1, **dadurch gekennzeichnet**, daß der Durchmesser (D1) der Innenbohrung (2) am hinteren Ende des Dübels etwa gleich dem Außendurchmesser des Spreizstiftes (4, 14) ist und sich zum vorderen Ende (15) des Dübels (1) hin gleichmäßig auf einen Durchmesser (D2) verjüngt, der kleiner ist als der Außendurchmesser des Spreizstiftes (4,14).

3. Spreizdübel nach Anspruch 1, **dadurch gekennzeichnet**, daß die maximale Exzentrizität (e) der Mittelachse der Innenbohrung (2) zur Längsachse (3) des Spreizdübels (1) etwa gleich dem halben Durchmesser der Innenbohrung (2) ist.

4. Spreizdübel nach Anspruch 1, **dadurch gekennzeichnet**, daß die Innenbohrung (2) auf die Länge des Spreizdübels (1) wenigstens zwei vollständige Windungen aufweist.

5. Spreizdübel nach Anspruch 1, **dadurch gekennzeichnet**, daß der Spreizdübel (1) mit mehreren Längsschlitzen (16) versehen ist.

6. Spreizdübel nach Anspruch 5, **dadurch gekennzeichnet**, daß die Längsschlitze (16) abschnittsweise und auf dem Umfang und in Längsrichtung versetzt zueinander angeordnet sind.

7. Spreizdübel nach Anspruch 6, **dadurch gekennzeichnet**, daß die Versetzung der Längsschlitze am Umfang jeweils 90° beträgt.

8. Spreizdübel nach Anspruch 5, **dadurch gekennzeichnet**, daß die Längsschlitze wendelförmig entsprechend der Innenbohrung (2) angeordnet sind.

9. Spreizdübel nach Anspruch 1, **dadurch gekennzeichnet**, daß die Innenbohrung (2) mit wenigstens einer entlang ihrer Mantellinie verlaufenden Nut (10) zum Eingriff eines an einem nagelförmigen Spreizstift (4) angeordneten Gewindegangs versehen ist.

## Claims

1. Expansible fixing plug (1) having an internal bore (2) passing right through the plug body and having an expansion bolt (4) in the form of a nail or screw to be driven into the internal bore (2), the internal bore (2) at least for a part of its length having a diameter that is the same or slightly smaller than the outer diameter of the expansion bolt (4), characterized in that the internal bore (2) in the expansible fixing plug (1) is arranged helically wound around the centre line (3).

2. Expansible fixing plug according to claim 1, characterized in that the diameter (D1) of the internal bore (2) at the rear end of the fixing plug is approximately the same as the outer diameter of the expansion bolt (4, 14) and tapers uniformly towards the leading end (15) of the fixing plug (1) to a diameter (D2) that is smaller than the outer diameter of the expansion bolt (4, 14).

3. Expansible fixing plug according to claim 1, characterized in that the maximum eccentricity (e) of the centre line of the internal bore (2) with respect to the longitudinal axis (3) of the expansible fixing plug (1) is approximately the same as half the diameter of the internal bore (2).

4. Expansible fixing plug according to claim 1, characterized in that the internal bore (2) has at least two complete turns for the length of the expansible fixing plug (1).

5. Expansible fixing plug according to claim 1, characterized in that the expansible fixing plug (1) is provided with several longitudinal slits (16).

6. Expansible fixing plug according to claim 5, characterized in that the longitudinal slits (16) are located in sections and offset with respect to one another on the outer circumference and in the longitudinal direction.

7. Expansible fixing plug according to claim 6, characterized in that the offset of the longitudinal slits at the outer circumference is 90° in each case.

8. Expansible fixing plug according to claim 5, characterized in that the longitudinal slits are arranged helically corresponding to the internal bore (2).

9. Expansible fixing plug according to claim 1, characterized in that the internal bore (2) is provided with at least one groove (10) running along its surface-generating line, for engagement of a thread arranged on an expansion bolt (4) in the form of a nail.

## Revendications

1. Cheville d'expansion (1) comprenant un perçage intérieur (2) traversant intégralement le corps de ladite cheville, et une broche d'écartement (4) en forme de clou ou de vis, pouvant être enfoncée dans le perçage intérieur (2), ledit perçage intérieur (2) présentant, au moins sur une partie de sa longueur, un diamètre égal ou légèrement inférieur au diamètre extérieur de la broche d'écartement (4), caractérisée par le fait que le perçage intérieur (2) est ménagé, dans la cheville d'expansion (1), avec torsade hélicoïdale autour de l'axe médian (3).

2. Cheville d'expansion selon la revendication 1, caractérisée par le fait que le diamètre (D1) du perçage intérieur (2) est sensiblement égal au diamètre extérieur de la broche d'écartement (4, 14) à l'extrémité postérieure de la cheville et se rétrécit uniformément, vers l'extrémité antérieure (15) de ladite cheville (1), jusqu'à un diamètre (D2) plus petit que le diamètre extérieur de ladite broche d'écartement (4, 14).

3. Cheville d'expansion selon la revendication 1, caractérisée par le fait que l'excentricité maximale (e) de l'axe médian du perçage intérieur (2), par rapport à l'axe longitudinal (3) de la cheville d'expansion (1), est sensiblement égale à la moitié du diamètre dudit perçage intérieur (2).

4. Cheville d'expansion selon la revendication 1, caractérisée par le fait que le perçage intérieur (2) présente au moins deux spires intégrales sur la longueur de ladite cheville d'expansion (1).

5. Cheville d'expansion selon la revendication 1, caractérisée par le fait que ladite cheville d'expansion (1) est munie de plusieurs fentes longitudinales (16).

6. Cheville d'expansion selon la revendication 5, caractérisée par le fait que les fentes longitudinales (16) sont façonnées par segments et avec décalage mutuel, sur le pourtour, dans la direction longitudinale.

7. Cheville d'expansion selon la revendication 6, caractérisée par le fait que le décalage des fentes longitudinales, sur le pourtour, mesure à chaque fois 90°.

8. Cheville d'expansion selon la revendication 5, caractérisée par le fait que les fentes longitudinales sont agencées hélicoïdalement, en concordance avec le perçage intérieur (2).

9. Cheville d'expansion selon la revendication 1, caractérisée par le fait que le perçage intérieur (2) est pourvu d'au moins une gorge (10) s'étendant le long de sa génératrice, en vue de la pénétration d'un filet ménagé sur une broche d'écartement (4) en forme de clou.
